# EUROPEAN PATENT APPLICATION

(11) **EP 4 790 472 A1**
(43) Date of publication of application: **12.08.2026**
(21) Application number: 25156961.2
(22) Date of filing: 10.02.2025
(51) Int. Cl.: G02B 21/22, G02B 21/00, G02B 21/36, G02B 27/00, H04N 13/117, H04N 13/383

(54) **DEVICES FOR PROVIDING AN IMAGE STREAM AND METHODS THEREFOR**

(71) Applicant: Leica Instruments (Singapore) Pte Ltd., Singapore 618299 (SG)
(72) Inventor: THEMELIS, George, 618299 Singapore (SG); JUNG, David, 618299 Singapore (SG)
(74) Representative: Paustian & Partner Patentanwälte mbB

(57) **Abstract**

A first aspect of the present disclosure is related to a device for providing an image stream,
configured to:
- obtain of a sample a plurality of stereo images from a stereo imaging system, wherein a stereo image comprises a left image and a right image as stereo information; and
- obtain a user position information;
- for each image, determine a single-view image based on the left image, the right image, and on the user position information;
- provide the single-view image for display.

## Description

### Technical Field

This disclosure is related to devices for providing an image stream and to methods to operate such devices.

### Background

Stereo cameras, also known as stereoscopic imaging systems, measure depth by capturing two offset viewpoints. This technology has found valuable applications in medical and diagnostic imaging due to its ability to provide three-dimensional visualization of anatomical structures. In surgical procedures, stereo cameras can guide surgeons by offering 3D perspectives of the operative field, enhancing depth perception and precision. They aid in minimally invasive surgeries by improving spatial understanding of tissue and instrument positioning, reducing the risk of accidental damage. Additionally, stereo vision can generate accurate 3D reconstructions for diagnostics, aiding in early detection of abnormalities. For instance, stereo endoscopes can explore internal pathways, detecting subtle irregularities in tissue morphology. However, 3D display systems can be expensive and bulky. Improvements are desirable.

### Summary

An object of the present disclosure is to improve display of 3D information.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for providing an image stream,
*configured to:*
- *obtain of a sample a plurality of stereo images from a stereo imaging system, wherein a stereo image comprises a left image and* a *right image* as *stereo information; and*
- *obtain a user position information;*
- *for each image, determine a single-view image based on the left image, the right image, and on the user position information;*
- *provide the single-view image for display.*

A device according to the first aspect can be a control device, e.g. a specially programmed computer, configured to control an imaging device and/or it can be a part of the imaging device. An imaging device may be configured to observe a sample from two perspectives in a medical and/or diagnostical context. A biperspective medical and/or diagnostic imaging device can be a microscope, an exoscope, etc., wherein the biperspective device may comprise a system with at least two cameras and/or is related to two independent cameras. The two cameras are configured to observe a sample from two different perspectives/viewpoints. An imaging device, for which the single-view image is provided may comprise a 2D-display or be connected to a 2D-display. Additionally or alternatively, a device according to the first aspect may provide the single view image to a standalone 2D-display.

A sample can be any object and/or specimen that can be viewed with an imaging device. In a surgical or diagnostic context, a sample can be an organ of a patient and/or a part of an organ. It can be a biopsy, in particular one that is isolated and analyzed in situ. A sample can be or comprise a bone and/or blood of a patient. A sample can also comprise a suture, an incision, or any other artifact placed within or at a being's body for or during a surgical procedure.

Obtaining an image in the sense of this disclosure can comprise receiving and/or a fetching an image information.

A stereo image can be provided by a stereo camera of an imaging system that may be related to an operator, such as a surgeon who operates a microscope. The image can show visual information, such as normal light or visual light and/or non-visual information, such as infrared information. A first perspective can be based on the viewpoint or mounting point of the first stereo camera. A stereo imaging system, such as a stereo camera, can be a device that uses two lenses placed some distance apart to simultaneously capture two separate images of the same scene (simple stereo). A stereo camera can also comprise a more complex design beyond two fixed lenses. Such cameras could include multiple lenses or sensor arrays, adjustable interaxial distances, automated alignment systems, synchronized shutters, and/or integrated computational processing.

A user position information may be an information about an observation angle (also termed "gaze angle", "viewing angle" in this disclosure) in which a user observes the sample on a 2D-display to which the single-view image is provided to. A user position information may additionally comprise a user distance, i.e. the distance between the user and the display and/or to a pre-defined point relative to the display (wherein the display corresponds to the observation point of the stereo camera). A user distance may be the gaze distance, e.g. the distance the user and a distance measuring device (e.g. a camera) and/or another focus point relative to the measuring device. Additionally or alternatively, a user distance may be the shortest distance between user and display and/or to a pre-defined point relative to the display.

A single view image can in particular be based on using the different perspective information comprised in the left image and the right image of a stereo image. Providing a single-view image in the sense of this disclosure can comprise sending the information and/or storing the information for others to fetch, e.g. storing the information in a shared memory. In particular a plurality of consecutive images can be determined and provided as an image stream, i.e. a video stream, for display. A single view image can be determined by adapting a left image and/or on a right image of the stereo camera. Furthermore, a single view image is based on depth information of the stereo image, i.e. of on information comprised in the left and right image of a stereo image.

Embodiments of the first aspect provide perspective-dependent image information and thereby a depth experience for a user on a 2D-display.

An embodiment of the first aspect is related to a device for providing an image stream,
*comprising one or both of:*
- *the stereo camera;*
- *a display for displaying the single-view image* .

In particular, the device can be a software device and configured to be executed on a computer of the stereo camera and/or on a computer of the display. Additionally or alternatively, the device can also comprise or be a stereo microscope and the above-named functions may be performed on a computer of the stereo microscope.

An embodiment of the first aspect is related to a device for providing an image stream,
*wherein the user position information comprises one or more:*
- *a position of the user's head;*
- *a position of one or both of the user's* eye;
- *a position of the user's torso;*
- *a position of the user's arms;*
- a *position of a marker on the user.*

Suitable ways to obtain a user position may comprise measurement or estimation of head position, eye position, torso position, arm position, and/or a marker on the user. In each case, an orientation vector can be computed and compared to the screen's surface or a known reference.

Head-based methods may rely on cameras or depth sensors to locate facial landmarks and may fit a 3D model and/or triangulate feature positions, producing a head pose vector that is compared to the screen's normal. Eye-position-based methods for measuring user position information may use infrared illumination and/and high-resolution cameras to detect corneal or pupil reflections. Torso-position methods and/or arm-based position tracking methods may involve pose estimation of body key points to produce a coarse vector. Based on a body model head or eye positions may be derived therefrom. Marker-based tracking may comprise one or more fiducial tags placed on the user, such as on a helmet or near the eyes. Based on the derived information a 3D position and orientation may be determined to approximate gaze direction in relation to the display. A user position information may be observed by obtaining information from passive or active markers (e.g., QR codes, infrared tags). The system detects these markers' positions and orientations through image processing, allowing precise tracking of the user's location.

An embodiment of the first aspect is related to a device for providing an image stream,
*comprising a means for observing the user position, in particular one or more of:*
- *a camera;*
- *an* eye *tracker;*
- *a head tracker;*
- *a body tracker;*
- *a receiver for signals of an active marker;*
- *a detection means for a passive marker.*

One or more means for observing a user position may be employed.

A camera may be used to determine a gaze direction from an identification of the user's eyes identified from an image of the camera. The camera can be mounted such that observes an image which is parallel to the display, e.g. by attaching the camera on the display or such that it can "look through" the center of the display. Thereby, gaze direction can be efficiently identified by determining the angle to one of the user's eyes. Methods that track other parts of the body, such as the forehead and/or the nose, may also be employed.

An eye tracker is a device or system that measures a user's eye position and/or movements. Additionally or alternatively an eye tracker may directly provide gaze direction. Gaze direction may be determined relative to the display surface. Based on a gaze direction the single-view image will be determined such that the user will experience a gaze-dependent view. An eye tracker may comprise specialized cameras and infrared illumination for accurate and real-time tracking. Similar to the camera, also the head tracker may be attached to the display, or mounted in such a way that determination of a gaze angle (in one or in multiple dimensions) relative to the display is computationally efficient such computation delays are minimized.

A head tracker is a device or system that measures the orientation and position of a person's head, in particular using sensors or cameras. Based on the head tracker information, a gaze direction may be determined relative to the display surface. This can be based on a model of a user's head. Similar, a model of a user's body may be used to infer from information from a body tracker to a gaze direction relative to the display.

An active marker worn by a user emits signals that allow external sensors or cameras to track its position, in particular a precise 3D orientation. The marker may be in particular be aligned with the user's line of sight (for example, placed near their eyes). The device may then compare the marker's orientation vector to the display's reference axis to determine the user's gaze angle relative to the screen. Additionally or alternatively, one or more active markers may be used that provide an absolute position within a certain room and by which a gaze angle relative to a display (which may also have an absolute position in the same room) can be calculated, e.g. by transforming the information into the display's coordinate system.

A passive marker, such as a tag or other recognizable pattern, may be attached near the user's eyes or on a head-mounted device. One or more cameras can detect and track this marker by analyzing its distinct visual pattern. The system may then estimate the marker's 3D orientation relative to the camera's coordinate system. By comparing that orientation vector to the display's reference axis (for example, the screen normal), it may determine the user's gaze angle.

An embodiment of the first aspect is related to a device for providing an image stream,
*configured to:*
- *perform a user gaze angle detection, in particular based on a determination of one or both of the user's eyes, based on the user position information.*

A user gaze angle may be one dimensional gaze angle or a multi-dimensional gaze angle.

An embodiment of the first aspect is related to a device for providing an image stream,
*wherein user position information, in particular a gaze angle, is obtained:*
- *at constant intervals;*
- *if the user position changes.*

A user position information (e.g. a gaze angle and/or a distance to the display) may be observed in constant sampling intervals, e.g. at 1 ms. Additionally or alternatively, user position information may only be observed in case the user position has changed, and the amount of change is larger than a pre-defined threshold. In this case the change of position information needs to be observed, which can be done with a less complex and/or cheaper sensor that the position sensor.

An embodiment of the first aspect is related to a device for providing an image stream,
*configured to:*
- *map the user position to a virtual position between the left image and the right image of the stereo image;*
- *determine the single-single view image based on weighting the virtual position* .

For example, a user position comprises a gaze angle of the user and the shortest distance of the user to the display. Based on this information (and on the fact that the display corresponds to the observation point of the stereo camera that provides the left and right stereo images), the user's position can be mapped to a straight line defined by the line/distance of the two lenses of the stereo camera and/or by the center of the left image and the center of the right image of the stereo camera. If this line is restricted to the line between the lenses/images, then the line is also called "baseline" in stereo vision. In other words, the baseline of a stereo camera is the distance between the optical centers of its two lenses.

The shortest distance between the user and the camera system may be on the baseline of the stereo camera. Then the mapping of the user position to the baseline is already complete. Alternatively, the shortest distance may also be left of the left lens/image or right of the right lens/image, i.e. the shortest distance between user and display (which corresponds to the camera) does not end on the baseline of the stereo camera. User positions with shortest user distances that do not end on the baseline of the stereo camera may be forcibly mapped to one of the two starting points of the stereo camera's baseline: If the user is located left of the left lens, then its position is mapped to the center of the left lens (which is the most left point of the baseline). If the user is located right of the right lens, then its position is mapped to the center of the right lens (which is the most right point of the baseline). This is only one example of how a mapping to a virtual position between the left image and the right image of the stereo image can be determined.

An embodiment of the first aspect is related to a device for providing an image stream,
*configured to:*
- *determine a disparity map based on the left image and the right image of the stereo image;*
- *determine the single-view image based on the disparity map.*

A disparity map may be a two-dimensional representation indicating, e.g. for each pixel in a stereo image, the difference in positions between the left and right views. Each pixel's intensity/value corresponds to a disparity, allowing recovery of relative depths and enabling three-dimensional understanding of a scene from the two-dimensional left and right images. Based on a disparity (map), pixels for any perspective on the baseline (i.e. a straight line between the left and the right image) can be determined. A disparity map can be determined by mapping the left image of a stereo camera to a right image and/or another disparity map can be determined by mapping the right image to the left image. Disparity maps can be created for stereo images. Since, the stereo cameras are aligned vertically, the correspondence problem, i.e. to find corresponding sample pixel of the image of the left camera in the right camera image, can be solved line by line.

Based on the determined disparity map, a virtual single-view image can be generated for the point on the baseline to which the user position is mapped. In case the user position is mapped to the center of the baseline (i.e. a gaze angle of 0° is detected), a disparity-map-based determination of a single-view image can be as follows: Each pixel of a left or a right original image may be shifted based on a weighted disparity (disparity value in the same pixel coordinate of a disparity map determined from the left and the right image) to a virtual single-view image. For example, the pixel at location (1,1) of a left image and of a right image has a disparity value of 12, then it can be mapped based on half of the disparity (= 6) to a pixel (1,7) in a single-view image. This can be done for every pixel in the original image. This would provide a single-view image in the middle of the baseline and correspond to a gaze angle of 0°.

An embodiment of the first aspect is related to a device for providing an image stream,
*configured to:*
- *determine a first single-view image based on a first stereo image and on a first disparity map based on this first stereo image; and*
- *determine a second single-view image based on* -- *a second stereo image, which was acquired after the first stereo image;*

-- *on a second disparity map based on the second stereo image; and*
- *on the first stereo image and*/*or the first disparity map.*

By using information from a previous determination of a previous single-view image, processing resources for a later determination of a further single-view image may be reduced. For example, a processing time for determining a mapping to a baseline and/or a processing time for determining a further single-view image based on a disparity map may be shortened. This may facilitate realtime determination of a stream of single-view images for a user of a 2D-display.

An embodiment of the first aspect is related to a device for providing an image stream,
*wherein the single view-image is determined based on one or more of:*
- *an artificial intelligence;*
- *a time-of-flight information;*
- *a structured light information.*

For example algorithms that harness deep learning models trained on large stereo data sets may accurately match features between the left and right images. These matches may yield a detailed disparity map, which indicates depth, and which can be processed with the user position information to generate a single-view image as described above.

Time-of-flight sensors emit light pulses and measure the return time to derive precise distance information for each pixel. This depth data (disparity map) may be used together or alternatively to a disparity map based on the stereo image in order to map a sample image to a user position information.

A structured light projector casts known patterns onto the sample, and the stereo camera captures the deformed patterns. By analyzing these deformations, depth measurements can be obtained. This depth data (disparity map) may be used together or alternatively to a disparity map based on the stereo image in order to map a sample image to a user position information.

An embodiment of the first aspect is related to a device for providing an image stream,
*configured to:*
- *obtain a update information of the single view image; and*
- *determine and*/*or provide the single view image based on the obtained update information.*

An update information may be related to a user information. For example, the user can input a frequency that defines how often a new single-view image is determined. Additionally or alternatively, an update information may be related to a change in a user position, e.g. a change in position. If a change of a user position exceeds a pre-defined threshold, a new single-view image may be determined. This changes needs not only related to a user position (e.g. a gaze angle or a distance) but can also be related to a derived user-position, e.g. a gaze velocity and/or gaze acceleration. Thereby, a user can effectively decide how fast the view should be updated.

An embodiment of the first aspect is related to a device for providing an image stream,
*configured to:*
- *indicate blind spots in the single-view image* .

A determination of a single-view image based on a left image and/or on a right image may may lead to a single-view image that is not defined properly in every pixel. This is because a left image may comprise information that a right image has not and vice versa.

To avoid confusion of the user these pixels can be indicated, e.g. with a predefined color. Additionally or alternatively, they can be filled with existing information from either one of a left image or a right image of a stereo image. In one embodiment, non-defined single view image information is replaced with image information from a left image in a first color and from a right image in a second color. In this way the user can see from which camera or side the replacement information sources.

An embodiment of the first aspect is related to a device for providing an image stream,
*configured to:*
*provide the single-view image in a stream of single-view images, in particular a video stream.*

An image stream may be provided, e.g. in any of the known video formats, such as MP4, AVI, MOV, or WMV.

An embodiment of the first aspect is related to a device for providing an image stream,
*configured to:*
- *switch between a plurality of users.*

A switch can be implemented e.g. by a user recognition and/or by manual user assignment. Based on user to which the device has switched, the user position information is determined, and the single-view image is computed. This facilitates cooperation of different person in front of a 2D-display of the imaging device, e.g. in front of a microscope.

A second aspect of the present disclosure is related to a method for providing an image stream,
*comprising the steps:*
- *obtaining a plurality of stereo images from a stereo imaging system, wherein* a *stereo image comprises a left image and* a *right image* as *stereo information; and*
- *obtaining a user position information;*
- *for each image, determining a single-view image based on the left image, the right image, and on the user position information;*
- *providing the single-view image for display.*

A method according to the second aspect can comprise steps for features and/or functionalities of any embodiment disclosed in relation to the first aspect of this disclosure and/or to one or more of the embodiments disclosed in relation to the figures below.

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates an operation of a device according to an embodiment of this disclosure.
Fig. 2 illustrates an operation of a device according to an embodiment of this disclosure.
Fig. 3 illustrates different operations of a device according to embodiments of this disclosure.
Fig. 4 illustrates a microscope system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure and which illustrate specific aspects in which the present disclosure can be understood. Identical reference signs refer to identical or at least functionally or structurally similar features.

### Detailed description

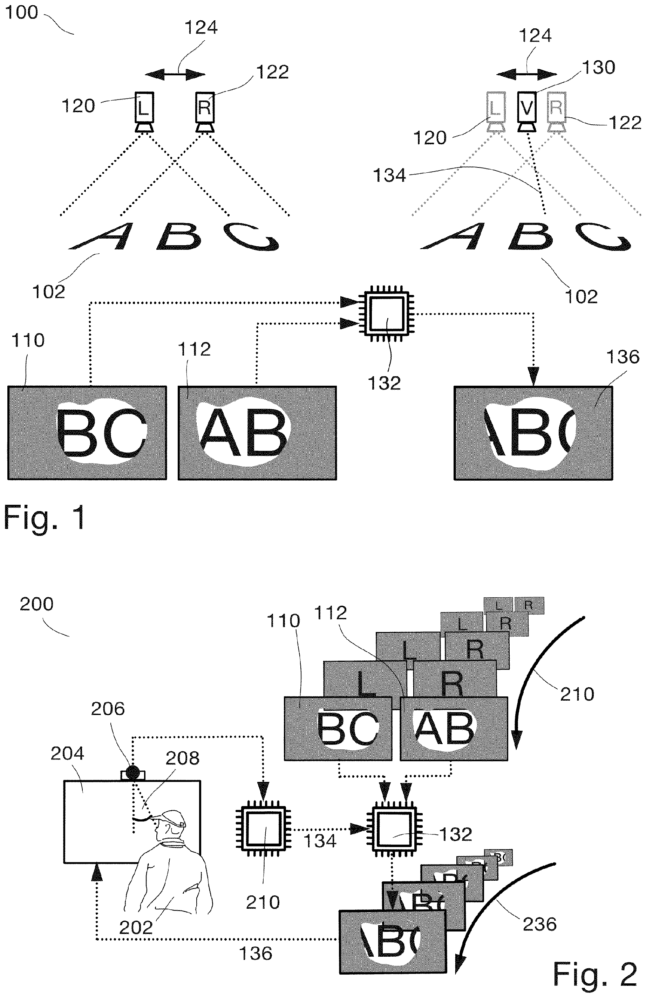

Fig. 1 illustrates an operation 100 of a device according to an embodiment of this disclosure, in which some of the basic features are illustrated. A perspective medical and/or diagnostic imaging device, such as a microscope, comprises a stereo camera that comprises a left lens 120 and right lens 122. The lenses are distanced by the baseline 124 of the stereo camera. By the two lenses, images of a sample 102 are captured. The sample is represented by letters "ABC". As can be seen by the viewing cones of the lenses 120, 122 the viewing fields of each cameras are partly overlapping.

Based on the images of the lenses 120, 122, a virtual camera 130 is emulated. The virtual camera 130 can have arbitrarily definable viewing points on the baseline 124 of the stereo camera and therefore enables different perspectives 134 on the sample 102. In the lower part of the figure the signal processing is illustrated. A left image 110 provided by the left lens 120 and a right image 112 provided by the right lens 122 a communicated to a processor 132. This may be a computer with respective software of a hardware-based processing device such as an FPGA. Based on the processor a single-view image 136 is determined, which is then provided for display at an 2D-display, e.g. the display of the perspective medical and/or diagnostic imaging device. As can be seen, the image 136 is different from the images 110 and 112 it comprises parts of both of them. The generation of the image 136 is based information provided by the images 110, 112 of the two lenses 120, 122 as explained above.

Fig. 2 illustrates an operation 200 of a device according to an embodiment of this disclosure, and in particular the potential way to produce perspective information 134 based on which the single-view image 136 is based. A user 202 watches a sample on a 2D-screen 204. The user's gaze is observed by a camera 206, which is placed on top of the screen. The gaze information of the camera is communicated to a processor 210 of the device to determine the user's gaze angle 208 and optionally also the distance to the user to the screen. Based on this information processor 210 then computes the virtual perspective 134 (illustrated in one example in Fig. 1). This can be done continuously or event-triggered, e.g. when a position change of the user exceeds a pre-defined threshold. The virtual perspective 134 is then communicated to processor 132 in order to compute the virtual single view image 136. Processors 210 and 132 can also be implemented in one processor.

Based on the forgoing operation cycle consecutive left and right images 210 can be processed to determine an image stream 236 that is eventually communicated to the 2D-display 204. The image stream 236 provides the user 202 a view on the sample dynamically adapted to her/his gaze 208.

In a non-illustrated embodiment, the user gaze is measured horizontally and vertically. Furthermore, a first stereo camera observes the sample in a horizonal orientation, and a second camera observes the sample in a vertical orientation. Then a first virtual image is determined based on the horizontal part of the user's gaze and on a stereo image of the horizontally oriented stereo camera (as described above). The first virtual image is then further adapted based the vertical part of the user's gaze and on the left and right image of the vertically aligned camera. The determination of the vertical adjustment be done principally in the same way as the adaptation of the horizontal adjustment (e.g. as described above). Based on this two-stepped processing, a user 2D-image (stream) can be provided that accounts for user vertical and horizontal head movements of the user.

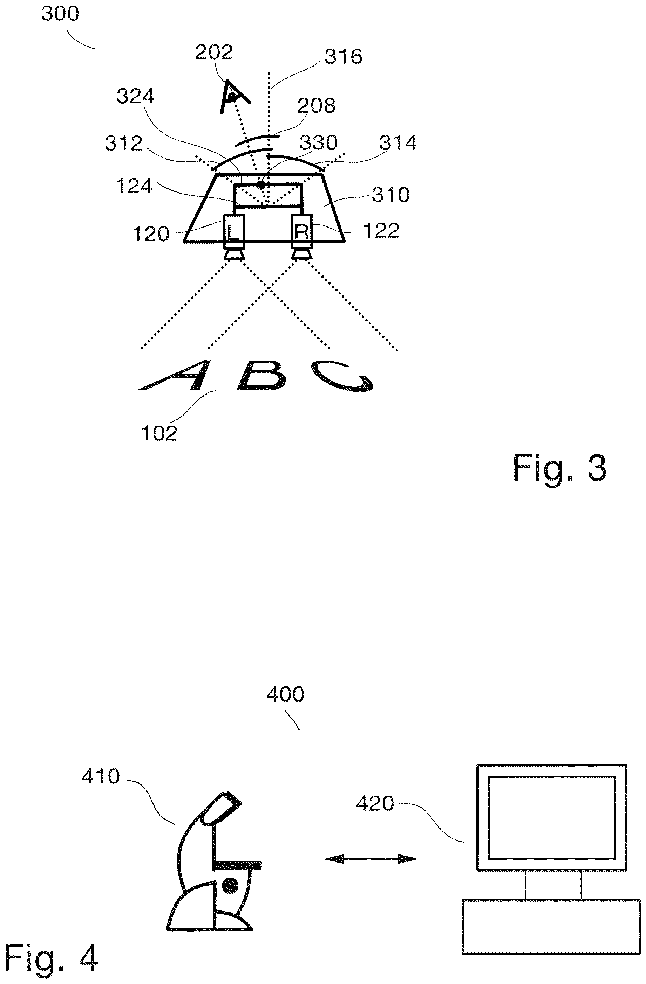

Fig. 3 illustrates an operation 300 of a device according to embodiments of this disclosure and in particular a mapping of a measured gaze angle 208 to a point on a baseline of a stereo camera. As introduced in the preceding figures a sample 102 is captured by two lenses 120, 122 of a stereo camera with the baseline 124, 324. The gaze angle is measured from the display plane 310. In reality, this is represented by the camera 206 capturing the viewing angle of the user to the 2D-display 204.

A mapping from the viewing angle 208 to the baseline 124, 324 can now be done as follows. The viewing angle is mapped to the baseline so that a positive maximum viewing angle 312 is mapped to the left image/view (i.e. the most left part of the baseline) and a negative maximum viewing angle 312 is mapped to the right image/view (i.e. the most right part of the baseline). The viewing angle zero 316 is mapped to the center between both views (i.e. to the center of the baseline). Intermediate viewing angles are mapped proportionally to the baseline 124, such as viewing angle 208 by user 202, which is mapped to the point 330. The distance of the user to the 2D-display is not required for this. The amount of the angle 312, 314 may be chosen to optimize 3D perception.

In a more complex embodiment, the distance of the user to the 2d-display may be used to modulate the angles 312, 314 during operation, because the user perception might change with the viewing distance and therefore an even more improved user experience could be provided.

Some embodiments relate to a microscope comprising a system as described in connection with one or more of the Figs. 1 to 3. Alternatively, a microscope may be part of or connected to a system as described in connection with one or more of the Figs. 1 to 3.

Fig. 4 shows a schematic illustration of a system 400 configured to perform a method described herein. The system 400 comprises a microscope 410 with a 2D-screen (not illustrated) and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: operation of imaging processing device
- 102: sample
- 110: left image
- 112: right image
- 120: left lens
- 122: right lens
- 124: baseline
- 130: virtual camera
- 132: processor
- 134: virtual perspective
- 136: single view image
- 200: operation of imaging processing device
- 202: user
- 204: 2D screen
- 206: camera
- 208: gaze angle
- 210: consecutive original images
- 236: image stream
- 300: operation of imaging processing device
- 310: display plane
- 312: viewing angle for right image
- 316: zero viewing angle
- 324: baseline
- 330: mapping of gaze angle to baseline
- 400: system
- 410: microscope
- 420: computer system

## Claims

1. A device for providing an image stream, in particular a stereo microscope, configured to:
- obtain of a sample (102) a plurality of stereo images from a stereo imaging system, wherein a stereo image comprises a left image (110) and a right image (112) as stereo information; and
- obtain a user position information;
- for each image, determine a single-view image (134) based on the left image, the right image, and on the user position information;
- provide the single-view image for display.

2. The device according to the preceding claim,
comprising one or both of:
- the stereo camera;
- a display for displaying the single-view image (134).

3. The device according to one of the preceding claims,
wherein the user position information comprises one or more:
- a position of the user's head;
- a position of one or both of the user's eye;
- a position of the user's torso;
- a position of the user's arms;
- a position of a marker on the user.

4. The device according to one of the preceding claims,
comprising a means for observing the user position, in particular one or more of:
- a camera;
- an eye tracker;
- a head tracker;
- a body tracker;
- a receiver for signals of an active marker;
- a detection means for a passive marker.

5. The device according to one of the preceding claims,
configured to:
- perform a user gaze angle detection, in particular based on a determination of one or both of the user's eyes, based on the user position information.

6. The device according to one of the preceding claims,
wherein user position information, in particular a gaze angle, is obtained:
- at constant intervals;
- if the user position changes.

7. The device according to the preceding claim,
configured to:
- map the user position to a virtual position (136) between the left image (110) and the right image (112) of the stereo image;
- determine the single-single view image (134) based on weighting the virtual position (136).

8. The device according to one of the preceding claims,
configured to:
- determine a disparity map based on the left image (110) and the right image (112) of the stereo image;
- determine the single-view image (134) based on the disparity map.

9. The device according to one of the preceding claims,
configured to:
- determine a first single-view image based on a first stereo image and on a first disparity map based on this first stereo image; and
- determine a second single-view image based on
-- a second stereo image, which was acquired after the first stereo image;
-- on a second disparity map based on the second stereo image; and
-- on the first stereo image and/or the first disparity map.

10. The device according to one of the preceding claims,
wherein the single view-image (134) is determined based on one or more of:
- an artificial intelligence;
- a time-of-flight information;
- a structured light information.

11. The device according to one of the preceding claims,
configured to:
- obtain a update information of the single view image; and
- determine and/or provide the single view image based on the obtained update information.

12. The device according to one of the preceding claims,
configured to:
- indicate blind spots in the single-view image (134).

13. The device according to one of the preceding claims,
configured to:
provide the single-view image in a stream of single-view images, in particular a video stream.

14. The device according to one of the preceding claims,
configured to:
- switch between a plurality of users.

15. A method for providing an image stream, in particular for a stereo microscope,
comprising the steps:
- obtaining a plurality of stereo images from a stereo imaging system, wherein a stereo image comprises a left image and a right image as stereo information; and
- obtaining a user position information;
- for each image, determining a single-view image based on the left image, the right image, and on the user position information;
- providing the single-view image for display.
